(19) Europäisches Patentamt / European Patent Office / Office européen des brevets

(11) **EP 4 328 268 A1**

(12) **EUROPEAN PATENT APPLICATION**
published in accordance with Art. 153(4) EPC

(43) Date of publication:
**28.02.2024 Bulletin 2024/09**

(21) Application number: **22791509.7**

(22) Date of filing: **29.03.2022**

(51) International Patent Classification (IPC):
*C08L 27/12* (2006.01)   *C09K 3/10* (2006.01)
*F16J 15/10* (2006.01)   *C08K 3/34* (2006.01)

(52) Cooperative Patent Classification (CPC):
**C08K 3/34; C08L 27/12; C09K 3/10; F16J 15/10**

(86) International application number:
**PCT/JP2022/015348**

(87) International publication number:
**WO 2022/224734 (27.10.2022 Gazette 2022/43)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.04.2021   JP 2021073052**

(71) Applicant: **Nichias Corporation
Tokyo 104-8555 (JP)**

(72) Inventor: **WATANABE Katsumi
Tokyo 104-8555 (JP)**

(74) Representative: **Grünecker Patent- und
Rechtsanwälte
PartG mbB
Leopoldstraße 4
80802 München (DE)**

(54) **FLUORORESIN SHEET FOR GASKET AND SHEET GASKET**

(57)   Provided is a fluorine resin sheet for a gasket capable of exhibiting stable sealability while suppressing deformation in the direction to the periphery even under a high-temperature condition when processed into a gasket shape.

The fluorine resin sheet for a gasket comprises a fluorine resin and an inorganic filler, wherein the content proportion of the fluorine resin is less than 60 vol%, and the inorganic filler includes calcined clay having a porosity of 13% or less, and the calcined clay is preferably calcined kaolin.

EP 4 328 268 A1

**Description**

[Technical Field]

The present invention relates to a fluorine resin sheet for a gasket and a sheet gasket.

[Background Art]

Conventionally, gaskets have been often used to seal leakage paths of various fluids in a wide range of fields such as petrochemical plants, various industrial machinery, automobiles and home appliances.

Ordinarily, since fluorine resin sheets for gaskets have creep resistance, which is unfavorable for fluorine resins, improved by containing an inorganic filler in addition to the chemical resistance, heat resistance and non-stickiness of fluorine resins, sheet gaskets obtained by blanking this fluorine resin sheet are used in a wide range as sealing materials for pipes or devices in petroleum refining and petrochemical plants.

When this gasket is mounted on a pipe flange, a housing or the like and loaded with an appropriate tightening load, a gap that is formed on the contact surface between the gasket and a mating member disappears, and it becomes possible to seal fluids.

However, in recent years, it has become an urgent task in all fields to further cut internal fluids leaking from the contact surface between the gasket and the mating member by improving the sealability of the gasket while environmental issues are emphasized.

An ordinary countermeasure to improve the sealability of gaskets is to set a larger tightening load, but such a countermeasure does not only increase the amount of work in the mounting, maintenance and inspection of gaskets but also makes creep characteristics, which are unfavorable for fluorine resins, worse, which makes gaskets themselves compressively deform, and thus it is difficult to say this countermeasure as the best solution.

Therefore, the applicants have proposed, as a countermeasure for exhibiting the sealability of sheet gaskets made of a fluorine resin over a long term, a fluorine resin sheet for a gasket capable of exhibiting sufficient sealability even when a content proportion of a fluorine resin is as small as less than 60 vol% by controlling the porosity in the sheet to be 13% or less by changing a manufacturing step of the fluorine resin sheet to satisfy both of sealability, which is favorable for fluorine resins, and creep characteristics, which are unfavorable for fluorine resins (refer to Patent Literature 1 (the specification of Japanese Patent No. 5391188)) .

[Citation List]

[Patent Literature]

[Patent Literature 1]
Japanese Patent No. 5391188

[Summary of Invention]

[Technical Problem]

However, in a case where a fluorine resin sheet gasket is used in a petrochemical plant, various industrial machinery or the like, it is known that an internal fluid is a heated fluid in many cases, in particular, under a high-temperature condition where the temperature exceeds 200°C, the creep resistance of a fluorine resin itself significantly appears, the gasket deforms in the radial direction (in the direction to the periphery), stress relaxation occurs, the surface pressure between the gasket and the flange joint surface of a pipe decreases and the sealability deteriorate.

More specifically, in a case where a tightening load is applied to a fluorine resin sheet gasket, first, the gasket is compressed in the thickness direction due to the tightening load, and then deformation in the radial direction occurs; however, in the case of the fluorine resin sheet gasket, basically, the gasket is likely to deform in the radial direction, and the deformation is significantly affected by the ambient temperature and is accelerated. The leakage of the internal fluid begins due to this deformation, and, furthermore, when a state where the deformation in the radial direction exceeds the diameter of the joint surface of the pipe flange is formed, a large amount of the internal fluid leaks.

In such a circumstance, an objective of the present invention is to provide a fluorine resin sheet for a gasket capable of exhibiting stable sealability while suppressing deformation in the direction to the periphery even under a high-temperature condition when processed into a gasket shape and a sheet gasket.

[Solution to Problem]

As a result of intensive studies to achieve the above-described objective, the present inventors have found that the above-described problem can be solved with a fluorine resin sheet for a gasket containing a fluorine resin and an inorganic filler, in which the content proportion of the fluorine resin is less than 60 vol%, and the inorganic filler includes calcined clay having a porosity of 13% or less and completed the present invention based on the present finding.
More specifically, the present invention provides

(1) a fluorine resin sheet for a gasket comprising a fluorine resin and an inorganic filler, wherein a content proportion of the fluorine resin is less than 60 vol%, and the inorganic filler includes calcined clay having a porosity of 13% or less,
(2) the fluorine resin sheet for a gasket according to (1), wherein a content proportion of the calcined clay is 2 vol% or more and less than 25 vol%,
(3) the fluorine resin sheet for a gasket according to (1), wherein the calcined clay is calcined kaolin,
(4) the fluorine resin sheet for a gasket according to (2), wherein the calcined clay is calcined kaolin, and
(5) a sheet gasket obtained by processing the fluorine resin sheet for a gasket according to any one of (1) to (4).

[Advantageous Effects of Invention]

According to the present invention, it is possible to provide a fluorine resin sheet for a gasket capable of exhibiting stable sealability while suppressing deformation in the direction to the periphery even under a high-temperature condition when processed into a gasket shape and to provide a sheet gasket.

[Description of Embodiments]

First, a fluorine resin sheet for a gasket according to the present invention will be described.
The fluorine resin sheet for a gasket according to the present invention comprises a fluorine resin and an inorganic filler, wherein the content proportion of the fluorine resin is less than 60 vol%, and the inorganic filler includes calcined clay having a porosity of 13% or less.
In the following description, the fluorine resin sheet for a gasket according to the present invention will be referred to as the fluorine resin sheet of the present invention as appropriate.
In the fluorine resin sheet of the present invention, as the fluorine resin, a well-known fluorine resin can be adopted, and, for example, one or more selected from a polytetrafluoroethylene resin (PTFE), modified PTFE, a tetrafluoroethylene-hexafluoropropylene copolymer (FEP), a tetrafluoroethylene-perfluoroalkyl vinyl ether copolymer (PFA), polychlorotrifluoroethylene (PCTEF), polyvinylidene fluoride (PVDF), polyvinyl fluoride (PVF), an ethylene-tetrafluoroethylene copolymer (ETFE), an ethylene-chlorotrifluoroethylene copolymer (ECTFE) and the like can be exemplified.
In the fluorine resin sheet of the present invention, the content proportion of the fluorine resin is less than 60 vol%, preferably 55 vol% or less, more preferably 54 vol% or less and particularly preferably 52 vol% or less.
In addition, in the fluorine resin sheet of the present invention, the content proportion of the fluorine resin is appropriately 43 vol% or more, more appropriately 45 vol% or more and still more appropriately 48 vol% or more.
The fluorine resin sheet of the present invention contains calcined clay as the inorganic filler.
In the fluorine resin sheet of the present invention, as the calcined clay, for example, one or more selected from calcined kaolin, calcined diatomaceous earth and the like can be exemplified, and calcined kaolin is preferable.
The calcined clay is a natural mineral calcined at a high temperature and, specifically, clay, which is a clay mineral, calcined at a temperature of approximately 1000°C.
The water content of the calcined clay is normally 0.5 mass% or less (0.0 to 0.5 mass%), and such a water content of the calcined clay means a value that is measured by the following method.

<Method for Measuring Water Content>

About 100 g of a mass (m1) of a measurement specimen is weighed with a scale balance and then put into a 500 ml glass beaker.
Next, the beaker is dried in a constant temperature dryer with an atmospheric temperature of 105 to 110°C for two hours and put into a desiccator to be naturally cooled, and a constant weight (m2) is obtained.
The mass reduction proportion before and after the drying is regarded as the reduction proportion of contained moisture, and a value calculated by the following equation is considered as the water content.

$$\text{Water content (mass\%)} = ((m1 - m2 - m3)/m1) \times 100$$

(Here, m1 means the mass of the measurement specimen before the drying treatment, m2 means the total mass of the measurement specimen after the drying treatment and the beaker, and m3 means the mass of the beaker.)

In addition, normally, the calcined clay has an amorphous structure, the X-ray diffraction spectrum of the natural mineral before calcination exhibits a characteristics diffraction pattern having sharp peaks based on its component, but the X-ray diffraction spectrum of the calcined clay exhibits a diffraction pattern having broad peaks as a whole.

For example, in a case where the calcined clay is calcined kaolin, the X-ray diffraction spectrum thereof exhibits a diffraction pattern having slightly broad peaks derived from $\alpha$-alumina.

The calcined clay is in a state where crystal water has been discharged and the surface activity has been increased and is thus considered to be capable of easily improving the adhesion or bonding force to the fluorine resin constituting the fluorine resin sheet of the present invention.

Since the fluorine resin sheet of the present invention contains the calcined clay as described above, it is considered that the bonding forces between the components constituting the fluorine resin sheet of the present invention improve, consequently, the separation, decomposition, volatilization or the like of each component is suppressed, and a sealing effect is maintained for a long term.

Particularly, in a case where the calcined clay is calcined kaolin, when kaolin is calcined at a high temperature to generate calcined kaolin, the high-temperature calcination makes flaky primary particles forming kaolin aggregate with each other while holding the flaky shapes to form complicated secondary particles, and projections and recesses derived from such flaky shapes make it possible to increase the friction coefficient. Therefore, it is considered that, when calcined kaolin is added as a constituting component of the fluorine resin sheet of the present invention, and then the fluorine resin sheet of the present invention is processed into a sheet gasket, the slipperiness on the contact surface with a mating material can be suitably reduced by calcined kaolin interposed therebetween.

In addition, since the fluorine resin sheet of the present invention contains the calcined clay, it is considered that, when the fluorine resin sheet of the present invention is processed into a gasket, deformation in the direction to the periphery can be suitably suppressed even under high-temperature conditions.

Therefore, since the fluorine resin sheet of the present invention contains the calcined clay, when the fluorine resin sheet of the present invention is processed into a gasket, it is possible to easily exhibit stable sealability on the contact surface with a mating material while suitably suppressing deformation in the direction to the periphery even under high-temperature conditions.

In the fluorine resin sheet of the present invention, the average particle diameter of the calcined clay is preferably 30 $\mu$m or less, more preferably 0.5 to 10 $\mu$m and still more preferably 0.5 to 2 $\mu$m.

In the present application document, the average particle diameter of calcined kaolin means the value ($D_{50}$) at a cumulative frequency of 50% in a cumulative frequency distribution curve of particle diameters obtained from the frequency modulation degrees of scattered light after calcined kaolin is irradiated with laser beams using a laser scattering particle size distribution analyzer in a water dispersion state.

In the fluorine resin sheet of the present invention, since the average particle diameter of the calcined clay is 30 $\mu$m or less, it is considered that, when the calcined clay is added as a constituting component of the fluorine resin sheet, it is possible to more effectively suppress a reduction in the friction coefficient and to suitably suppress the slipperiness on the contact surface between a gasket and a mating material.

In the fluorine resin sheet of the present invention, the content proportion of the calcined clay is preferably 2 vol% or more and less than 25 vol%, more preferably 2 vol% to 20 vol%, still more preferably 3 vol% to 15 vol% and far still more preferably 7 vol% to 10 vol%.

Since the fluorine resin sheet of the present invention contains the calcined clay as described above, when the fluorine resin sheet of the present invention is processed into a gasket, it is possible to easily exhibit stable sealability on the contact surface with a mating material while suitably suppressing deformation in the direction to the periphery even under high-temperature conditions.

On the other hand, since some of the flaky particles of the calcined clay are melted to form complicated secondary particles, pores are present in the secondary particles, and, when the content proportion of the calcined clay becomes too large, an effect of suppressing the slipperiness of the fluorine resin is enhanced, but the sealability is likely to deteriorate.

In the fluorine resin sheet of the present invention, since the content proportion of the calcined clay is within the above-described range, when the fluorine resin sheet is processed into a gasket, it is possible to easily exhibit stable sealability on the contact surface with a mating material while suitably suppressing deformation in the direction to the periphery even under high-temperature conditions.

In the fluorine resin sheet of the present invention, as an inorganic filler that can be contained aside from the calcined clay, one or more selected from a silicate mineral (clay) containing silicon and aluminum as main components and containing magnesium, iron, an alkaline earth metal, an alkali metal or the like, a natural mineral such as silica stone or wollastonite, an oxide such as silica, aluminum oxide, glass, zircon, titanium oxide or iron oxide, zirconium boride, a sulfurcontaining compound such as molybdenum disulfide, barium sulfate, carbon and the like can be exemplified.

The fluorine resin sheet of the present invention appropriately contains, as the inorganic filler, any one of aluminum oxide or silica stone or both of aluminum oxide and silica stone and more appropriately contains aluminum oxide together with the calcined clay.

The fluorine resin sheet of the present invention contains the inorganic filler, whereby it is possible to impart desired stress relaxation characteristics in sheet gaskets obtained by processing the fluorine resin sheet of the present invention.

In a case where the fluorine resin sheet of the present invention contains aluminum oxide as the inorganic filler, the content proportion of aluminum oxide is preferably 15 to 46 vol%, more preferably 25 to 46 vol% and still more preferably 30 to 46 vol%.

In a case where the fluorine resin sheet of the present invention contains silica stone as the inorganic filler, the content proportion of silica stone is preferably 15 to 46 vol%, more preferably 25 to 46 vol% and still more preferably 30 to 46 vol%.

In the fluorine resin sheet of the present invention, the total content proportion of the inorganic fillers is preferably 40 vol% or more, more preferably 45 vol% or more, still more preferably 46 vol% or more and particularly preferably 48 vol% or more.

In addition, in the fluorine resin sheet of the present invention, the total content proportion of the inorganic fillers is preferably 57 vol% or less, more preferably 55 vol% or less and still more preferably 52 vol% or less.

In the fluorine resin sheet of the present invention, reasons for expressing the content proportion of each constituting component not by "wt%" but by "vol%" are that, in a case where the content proportion of each constituting component is expressed by "wt%", the content proportion significantly varies with the density of each constituting component and that the fluorine resin sheet of the present invention is considered to form a dense sheet due to the fact that the gap between the inorganic fillers is filled with the fluorine resin and the degree of contribution made by the physical size (volume) is higher than the weight.

The fluorine resin sheet of the present invention may contain, as components other than the fluorine resin and the inorganic fillers, for example, an organic filler, an inorganic fiber, an organic fiber, an organic or inorganic coloring material and the like.

In a case where the fluorine resin sheet of the present invention contains the components other than the fluorine resin and the inorganic fillers, the total content proportion thereof is preferably 10 vol% or less of all of the constituting components of the fluorine resin sheet, and the fluorine resin sheet of the present invention more preferably does not contain the components other than the fluorine resin and the inorganic fillers (consists only of the fluorine resin and the inorganic filler).

The thickness of the fluorine resin sheet of the present invention is not particularly limited and is, for example, approximately 0.4 mm to 10.0 mm and normally approximately 1.0 to 3.0 mm.

The porosity of the fluorine resin sheet of the present invention is 13% or less, preferably 10% or less, more preferably 8% or less and still more preferably 6% or less.

In addition, in a case where sealing characteristics are emphasized or a case where the balance between stress relaxation characteristics and sealing characteristics is emphasized, the porosity is appropriately 2 to 10% and more appropriately 3 to 8%.

In the present application, the porosity serves as an index showing the abundance ratio of gaps that are formed in the fluorine resin sheet, and these gaps do not correspond to any component constituting the fluorine resin sheet of the present invention and thus the abundance ratio of gaps is not taken into account in the calculation of the content proportion (vol%) of the fluorine resin or the inorganic filler.

In the fluorine resin sheet of the present invention, since the porosity is controlled to be 13% or less, when the fluorine resin sheet is processed into a gasket shape, the stress relaxation characteristics are excellent and sufficient sealing characteristics can be easily exhibited even at high temperatures even when the content proportion of the fluorine resin is as small as less than 60 vol% (even when the relative content proportion of the inorganic fillers is large).

In the present application, the porosity can be obtained by the following equation (2) using a theoretical sheet density calculated by the following equation (1) and a sheet density measured separately (measured sheet density).

In the following equation (1), "weight of inorganic filler/density of inorganic filler" means the sum of "weight of calcined clay/density of calcined clay" and "weight/density" of each of the other inorganic fillers.

$$\text{Theoretical density} = \text{(weight of fluorine resin} + \text{total weight of inorganic fillers)}/\{\text{(weight of fluorine resin/density of fluorine resin)} + \text{(weight of inorganic filler/density of inorganic filler)}\} \quad (1)$$

$$\text{Porosity} = \{\text{(theoretical sheet density} - \text{measured sheet density)/theoretical sheet density}\} \times 100 \quad (2)$$

In the fluorine resin sheet of the present invention, the measured sheet density is appropriately 2.1 to 3.2 g/cm$^3$ and more appropriately 2.2 to 3.0 g/cm$^3$.

A suitable range of the measured sheet density varies with the inorganic fillers to be blended in.

In the present application document, the measured sheet density of the fluorine resin sheet means a value measured by the A method (collection of gas over water) of Plastics-Methods of determining the density and relative density of non-cellular plastics regulated in JIS K 7127.

Since the fluorine resin sheet of the present invention contains the fluorine resin in a predetermined proportion and also contains the calcined clay as the inorganic filler, it is considered that, when the fluorine resin sheet is processed into a gasket shape, deformation in the direction to the periphery can be suitably suppressed even under high-temperature conditions while the slipperiness on the contact surface with a mating material is suitably reduced by the calcined clay interposed therebetween.

Therefore, when the fluorine resin sheet of the present invention is processed into a gasket, it is possible to suitably suppress deformation in the direction to the periphery even under high-temperature conditions and to suitably suppress an increase in the relative compressive deformation, and thus stable sealability can be easily exhibited on the contact surface with a mating material.

In the present application document, the relative compressive deformation means a value obtained by the following method.

(Relative Compressive Deformation)

A disc-like test piece having a diameter of 25.4 mm is produced by cutting the fluorine resin sheet for a gasket, and an average value ($D_0$) is obtained by measuring the diameters of orthogonal two places.

Next, the test piece is compressed using a hot press heated to 100°C with a load of a compressive load 68.6 N/mm$^2$ for one minute, and then an average value ($D_1$) is obtained by measuring the diameters of orthogonal two places of the compressed test piece.

A change in the diameter of the test piece before and after the test is calculated by the following equation as the relative compressive deformation.

$$\text{Relative compressive deformation (\%)} = ((D_1{}^2 - D_0{}^2)/D_0{}^2) \times 100$$

Next, a method for manufacturing the fluorine resin sheet of the present invention will be described.

As the method for manufacturing the fluorine resin sheet of the present invention, a method in which a mixture containing the fluorine resin, the inorganic fillers including the calcined clay and a processing aid is processed into a sheet shape to produce a sheet-like product, then, the sheet-like product is dried, then, compressed and calcined can be exemplified.

In the method for manufacturing the fluorine resin sheet, the proportion of the fluorine resin used is preferably less than 60 vol%, more preferably 55 vol% or less, still more preferably 54 vol% or less and particularly preferably 52 vol% or less in a case where the total amount of the fluorine resin and the inorganic fillers used is set to 100 vol%.

In addition, in the method for manufacturing the fluorine resin sheet, the proportion of the fluorine resin used is appropriately 43 vol% or more, more appropriately 45 vol% or more and still more appropriately 48 vol% or more in a case where the total amount of the fluorine resin and the inorganic fillers used is set to 100 vol%.

In the method for manufacturing the fluorine resin sheet, the proportion of the calcined clay used is preferably 2 vol% or more and less than 25 vol%, more preferably 2 vol% to 20 vol%, still more preferably 3 vol% to 15 vol% and far still more preferably 7 vol% to 10 vol% in a case where the total amount of the fluorine resin and the inorganic fillers used is set to 100 vol%.

In the method for manufacturing the fluorine resin sheet, the proportion of all of the inorganic fillers used including the calcined clay is preferably 40 vol% or more, more preferably 45 vol% or more, still more preferably 46 vol% or more and particularly preferably 48 vol% or more in a case where the total amount of the fluorine resin and the inorganic fillers used is set to 100 vol%.

In addition, in the method for manufacturing the fluorine resin sheet, the proportion of all of the inorganic fillers used including the calcined clay is preferably 57 vol% or less, more preferably 55 vol% or less and still more preferably 52 vol% or less in a case where the total amount of the fluorine resin and the inorganic fillers used is set to 100 vol%.

In the method for manufacturing the fluorine resin sheet, the processing aid (molding aid) is not particularly limited, examples thereof include hydrocarbon-based organic solvents such as paraffin-based solvents, and specific examples thereof include ISOPAR E, ISOPAR G, ISOPAR H, ISOPAR L and ISOPAR M manufactured by Exxon Mobil Corporation.

These processing aids can be used singly or as a mixture of a plurality thereof, but processing aids having a low flash point are unstable in terms of safety, make the solvent content likely to change at the time of processing a raw material mixture into a sheet and are thus not preferable, and processing aids having a too high flash point dry slowly and are thus not preferable. Therefore, ISOPAR G and ISOPAR H having a flash point of 40 to 60°C are preferably used.

In the method for manufacturing the fluorine resin sheet, regarding the amount of the processing acid used, the volume thereof is preferably 1 to 100 times and more preferably 1 to 10 times the total volume of the fluorine resin and the inorganic fillers used.

In the method for manufacturing the fluorine resin sheet, the fluorine resin, the inorganic fillers and the processing aid, which are raw material components, can be made into a mixed part by being stirred and mixed in a mixer or the like, and the surplus processing aid after the mixing may be removed by filtration or the like.

The mixture is made into a sheet by extrusion molding, press compression, roll rolling or the like, and then an obtained sheet-like product is dried with an electric furnace or the like.

The sheet-like product can be dried by heating the sheet-like product at a temperature of the boiling point of the processing aid or lower for 10 to 48 hours, and a sheet-like dry treated material can be obtained by removing the processing aid by this drying treatment.

In the method for manufacturing the fluorine resin sheet, the sheet-like dry treated material obtained by the above-described drying is compressed. The compression can be performed with, for example, a press molding machine or a biaxial roll. A surface pressure that is imparted to the sheet-like dry treated material during the compression is appropriately 1 to 30 MPa, more appropriately 1 to 20 MPa and still more preferably 1 to 10 MPa. In a case where the compression is performed with a biaxial roll, the surface pressure can be imparted by, for example, setting the roll interval during rolling to approximately 0.2 to 1.5 mm.

In the method for manufacturing the fluorine resin sheet, the compression is performed so that the porosity of a fluorine resin sheet to be obtained preferably becomes 13% or less, more preferably becomes 10% or less, still more preferably becomes 8% or less and far still more preferably becomes 6% or less. The compression is particularly preferably performed so that the porosity of a fluorine resin sheet to be obtained becomes as low as possible.

When the sheet-like dried product is compressed so that the porosity of a fluorine resin sheet to be obtained becomes 13% or less, it is possible to obtain a fluorine resin sheet exhibiting excellent sealing characteristics.

In addition, in a case where sealing characteristics are emphasized in a fluorine resin sheet intended to be obtained or a case where the balance between stress relaxation characteristics and sealing characteristics is emphasized, the compression is performed so that the porosity of a fluorine resin sheet to be obtained becomes appropriately 2 to 10% and more appropriately 4 to 8%.

In the method for manufacturing the fluorine resin sheet, the porosity of a fluorine resin sheet to be obtained can be controlled by adjusting the conditions during this compression. The porosity of the fluorine resin sheet can be controlled by adjusting the load that is imparted with a press molding machine or a biaxial roll during compression, adjusting the interval between a pair of molding dies constituting the press molding machine or the interval between a pair of rolls constituting the biaxial roll or adjusting the press molding die temperature or the roll temperature.

In the method for manufacturing the fluorine resin sheet, a sheet-like compressed product obtained by the above-described compression is subjected to calcination treatment. The calcination treatment is performed by heating and sintering the sheet-like compressed product at a temperature of the melting point of the fluorine resin constituting the sheet-like compressed product or higher, and the temperature at which the calcination treatment is performed is appropriately 340 to 370°C while varying with the kind of the fluorine resin. In addition, during the calcination treatment, it is desirable to uniformly heat and calcine the entire sheet-like compressed product.

The fluorine resin sheet of the present invention can be manufactured as described above.

According to the present invention, it is possible to provide a fluorine resin sheet for a gasket capable of exhibiting stable sealability while suppressing deformation in the direction to the periphery even under a high-temperature condition when processed into a gasket shape.

Next, a sheet gasket of the present invention will be described.

The sheet gasket of the present invention is obtained by processing the fluorine resin sheet for a gasket of the present invention.

As a method for processing the fluorine resin sheet, a method in which the fluorine resin sheet is processed by blanking, cutting with a cutting machine or the like can be exemplified, and, when manufactured by the blanking or cutting with a cutting machine of the fluorine resin sheet for a gasket of the present invention, the sheet gasket of the present invention is capable of adopting an arbitrary shape.

The constituting components, thickness, and various physical properties (density, porosity and the like) of the sheet gasket of the present invention are the same as those of the fluorine resin sheet for a gasket of the present invention.

In the sheet gasket of the present invention, the sealing characteristics can be performed by evaluating sealability with respect to $N_2$ gas. In the present application document, the sealability with respect to $N_2$ gas mean a value obtained by tightening a sheet blanked to the regulated size of the JIS 10K 25A flange at a surface pressure of 35 MPa and measuring the leakage amount of $N_2$ gas having an internal pressure of 0.98 MPa after being loaded for 10 minutes by a downward displacement of water method.

According to the present invention, it is possible to provide a sheet gasket capable of exhibiting stable sealability while suppressing deformation in the direction to the periphery even under a high-temperature condition.

Hereinafter, the present invention will be described in more detail with examples and comparative examples, but the present invention is not limited to the following examples by any means.

In the examples and the comparative examples to be described below, measured densities, sealability evaluation, ratios of stress relaxation and relative compressive deformations were each performed by methods to be described below.

(Measured Density)

The measured density is measured by the A method (collection of gas over water) of Plastics-Methods of determining the density and relative density of non-cellular plastics regulated in JIS K 7127.

More specifically, a disc-like product having a diameter of 25.4 mm is produced by cutting a fluorine resin sheet for a gasket having a thickness of 1.5 mm, and the weight in air ($W_1$) and the weight in water ($W_2$) are measured using an electronic balance.

The measured density is calculated by the following equation from the two weights measured as described above.

$$\texttt{Measured density (g/cm}^3\texttt{)} = \texttt{W}_1/(\texttt{W}_1 - \texttt{W}_2) \times \texttt{W}_3$$

\* $W_3$: The density of water during measurement

(Sealability)

A donut-like product having the regulated dimensions of the JIS 10K 50A-RF flange (outer diameter: 104 mm, inner diameter: 61 mm) is produced by cutting a fluorine resin sheet for a gasket having a thickness of 1.5 mm and used as a sheet gasket.

The obtained sheet gasket is mounted between platens corresponding to JIS 10K 50A-RF and fixed using a hydraulic press at a compressive surface pressure of 34.3 N/mm$^2$.

The leakage amount of nitrogen gas of 0.98 MPa after being loaded in a hollow part of the platens for 10 minutes is measured by a pressure drop method.

(Ratio of Stress Relaxation)

One set of four test pieces that are 32 mm in length and 10 mm in width are produced by cutting the fluorine resin sheet for a gasket having a thickness of 1.5 mm.

The obtained test pieces are mounted between platens regulated by JIS R 3453 and tightened and fixed using an exclusive holder at a compressive load of 26.7 kN.

The test pieces mounted between the platens are heated at 100°C for 22 hours and then cooled to room temperature.

Next, the exclusive holder is loosened, and the ratio of stress relaxation is calculated by the following equation from readings on a dial gauge before and after the heating.

$$\text{Ratio of stress relaxation (\%)} = (D_0 - D_f)/D_0 \times 100$$

\*$D_0$: Reading on dial gauge during tightening
\*$D_f$: Reading on dial gauge after heating

(Relative Compressive Deformation)

A disc-like test piece having a diameter of 25.4 mm is produced by cutting the fluorine resin sheet for a gasket having a thickness of 1.5 mm, and an average value ($D_0$) is obtained by measuring the diameters of orthogonal two places.
Next, the test piece is compressed using a hot press heated to 100°C with a load of a compressive load 68.6 N/mm$^2$ for one minute, and then an average value ($D_1$) is obtained by measuring the diameters of orthogonal two places of the compressed test piece.
A change in the diameter of the test piece before and after the test is calculated by the following equation as the relative compressive deformation.

$$\text{Relative compressive deformation (\%)} = ((D_1{}^2 - D_0{}^2)/D_0{}^2) \times 100$$

(Example 1)

PTFE (manufactured by Daikin Industries, Ltd., density: 2.2 g/cm$^3$) was used as a fluorine resin, aluminum oxide (manufactured by Sumitomo Chemical Co., Ltd., density 3.9 g/cm$^3$) and calcined kaolin (manufactured by BASF Corporation, density 2.3 g/cm$^3$) were used as inorganic fillers, and the components were weighed according to blending proportions shown in Table 1 so that the total weight became 200 g.
ISOPAR G (manufactured by Exxon Mobil Corporation) was further added as a processing aid as much as five times in volume the total amount of PTFE and the inorganic fillers, and the components were mixed with a mixer for five minutes, filtered, then, put into an about 100 mm × 100 mm formwork and pressurized with a hydraulic press. Next, a mixture taken out from the formwork was rolled using a biaxial roll a plurality of times while the roll interval was gradually decreased, thereby producing a sheet-like product having a thickness of about 2.5 mm.
This sheet-like product was dried in an electric furnace at 85°C for 90 minutes or longer to remove the processing aid and then compressed by being rolled using the biaxial roll a plurality of times while the roll interval was gradually decreased, thereby producing a sheet-like compressed product having a thickness of 1.5 mm.
After that, the obtained sheet-like compressed product was subjected to calcination treatment in the electric furnace at 350°C for three hours, thereby producing a fluorine resin sheet having a thickness of 1.5 mm and a composition shown in Table 1.

(Example 2 to Example 6)

Fluorine resin sheets having a thickness of 1.5 mm were each produced by the same treatments as in Example 1 except that the blending proportions of PTFE, aluminum oxide and calcined kaolin were changed as shown in Table 1 and Table 2.

(Example 7)

A fluorine resin sheet having a thickness of 1.5 mm was produced by the same treatments as in Example 1 except that silica stone (manufactured by Maruesu Co., Ltd., density: 2.7 g/cm$^3$) was used instead of aluminum oxide (manufactured by Sumitomo Chemical Co., Ltd., density 3.9 g/cm$^3$) as an inorganic filler that was used together with calcined kaolin and blended in a proportion shown in Table 3.

(Example 8)

A fluorine resin sheet having a thickness of 1.5 mm was produced by the same treatments as in Example 1 except that silica stone (manufactured by Maruesu Co., Ltd., density: 2.7 g/cm$^3$) and clay (manufactured by Showa Chemical Co., Ltd., density: 2.6 g/cm$^3$) were used instead of aluminum oxide (manufactured by Sumitomo Chemical Co., Ltd., density 3.9 g/cm$^3$) as inorganic fillers that were used together with calcined kaolin and blended in proportions shown in Table 3.

(Example 9)

A fluorine resin sheet having a thickness of 1.5 mm was produced by the same treatments as in Example 1 except that clay (manufactured by Showa Chemical Co., Ltd., density: 2.6 g/cm$^3$) was used instead of aluminum oxide (manufactured by Sumitomo Chemical Co., Ltd., density 3.9 g/cm$^3$) as an inorganic filler that was used together with calcined kaolin and blended in a proportion shown in Table 3.

(Comparative Example 1)

A fluorine resin sheet having a thickness of 1.5 mm was produced by the same treatments as in Example 1 except that PTFE (manufactured by Daikin Industries, Ltd., density: 2.2 g/cm$^3$) was used as a fluorine resin, aluminum oxide (manufactured by Sumitomo Chemical Co., Ltd., density 3.9 g/cm$^3$) was used as an inorganic filler and blended in proportions shown in Table 1.

(Comparative Example 2 and Comparative Example 3)

PTFE (manufactured by Daikin Industries, Ltd., density: 2.2 g/cm$^3$) as a fluorine resin and aluminum oxide (manufactured by Sumitomo Chemical Co., Ltd., density 3.9 g/cm$^3$) and calcined kaolin (manufactured by BASF Corporation, density 2.3 g/cm$^3$) as inorganic fillers were used, and the components were weighed according to blending proportions shown in Table 3 so that the total weight became 200 g.
ISOPAR G (manufactured by Exxon Mobil Corporation) was further added as a processing aid as much as five times in volume the total amount of PTFE and the inorganic fillers, and the components were mixed with a mixer for five minutes, filtered, then, put into an about 100 mm × 100 mm formwork and pressurized with a hydraulic press. Next, mixtures taken out from the formwork were rolled using a biaxial roll a plurality of times while the roll interval was gradually decreased, thereby producing sheet-like products having a thickness of about 1.5 mm.
These sheet-like products were thermally treated in an electric furnace at 350°C for three hours, thereby producing fluorine resin sheets having a thickness of 1.5 mm and a composition shown in Table 3.
The results of the measured sheet densities, porosities, sealabilities, ratios of stress relaxation and relative compressive deformations of the fluorine resin sheets obtained in Example 1 to Example 9 and Comparative Example 1 to Comparative Example 3 are shown in Table 1 to Table 3.
These characteristics can be regarded as the characteristics of sheet gaskets that are obtained by processing the fluorine resin sheets.

[Table 1]

| | | Example 1 | Example 2 | Example 3 | Comparative Example 1 |
|---|---|---|---|---|---|
| Blending (vol%) | PTFE | 52 | 52 | 52 | 52 |
| | Aluminum oxide | 33 | 40 | 45 | 48 |
| | Silica stone | 0 | 0 | 0 | 0 |
| | Clay | 0 | 0 | 0 | 0 |
| | Calcined clay | 15 | 8 | 3 | 0 |
| Characteristics | Measured sheet density (g/cm$^3$) | 2.50 | 2.70 | 2.73 | 2.77 |
| | Porosity (%) | 10.3 | 8.1 | 8.2 | 7.4 |
| | Sealability (ml/min) | 0.15 | 0.09 | 0.05 | 0.04 |
| | Ratio of stress relaxation (%) | 21 | 20 | 20 | 21 |
| | Relative compressive deformation (%) | 3 | 3 | 3 | 9 |

[Table 2]

| | | | Example 4 | Example 5 | Example 6 |
|---|---|---|---|---|---|
| Blending (vol%) | | PTFE | 59 | 59 | 59 |
| | | Aluminum oxide | 26 | 33 | 38 |
| | | Silica stone | 0 | 0 | 0 |
| | | Clay | 0 | 0 | 0 |
| | | Calcined clay | 15 | 8 | 3 |
| Characteristics | | Measured sheet density (g/cm$^3$) | 2.56 | 2.68 | 2.75 |
| | | Porosity (%) | 3.8 | 3.7 | 3.7 |
| | | Sealability (ml/min) | 0.00 | 0.00 | 0.00 |
| | | Ratio of stress relaxation (%) | 24 | 32 | 36 |
| | | Relative compressive deformation (%) | 22 | 25 | 28 |

[Table 3]

| | | | Example 7 | Example 8 | Example 9 | Comparative Example 2 | Comparative Example 3 |
|---|---|---|---|---|---|---|---|
| Blending (vol%) | | PTFE | 52 | 52 | 52 | 52 | 59 |
| | | Aluminum oxide | 0 | 0 | 0 | 40 | 33 |
| | | Silica stone | 40 | 20 | 0 | 0 | 0 |
| | | Clay | 0 | 20 | 40 | 0 | 0 |
| | | Calcined clay | 8 | 8 | 8 | 8 | 8 |
| Characteristics | | Measured sheet density (g/cm$^3$) | 2.30 | 2.28 | 2.15 | 2.41 | 2.43 |
| | | Porosity (%) | 4.6 | 5.6 | 9.2 | 17.0 | 15.4 |
| | | Sealability (ml/min) | 0.01 | 0.00 | 0.01 | 0.82 | 0.25 |
| | | Ratio of stress relaxation (%) | 23 | 24 | 23 | 29 | 39 |
| | | Relative compressive deformation (%) | 7 | 7 | 9 | 4 | 27 |

It is found from Table 1 to Table 3 that the fluorine resin sheets obtained in Example 1 to Example 9 contain a predetermined amount of a fluorine resin, also contain calcined clay and have a porosity of 13% or less, and thus, even if the content proportion of the fluorine resin is as small as less than 60 vol% (even when the relative content proportion of the inorganic fillers is large), the initial sealability is favorable, compressive deformation caused by tightening at high temperatures is also small and stable sealability can be exhibited when the fluorine resin sheet is processed into a gasket shape.

In contrast, it is found from Table 1 that, for the fluorine resin sheet obtained in Comparative Example 1, the manufacturing method is the same as in Example 1, but the inorganic filler does not include calcined clay, and thus the relative compressive deformation is large, and it is difficult to exhibit stable sealability at high temperatures when the fluorine resin sheet is processed into a gasket shape.

In addition, it is found from Table 3 that, for the fluorine resin sheets obtained in Comparative Example 2 and Comparative Example 3, the porosities of the fluorine resin sheets exceed 13%, and thus, when the leakage amount is larger than 0.20 ml/minute, the initial sealability is low, and it is difficult to exhibit stable sealability at high temperatures when the fluorine resin sheet is processed into a gasket shape.

[Industrial Applicability]

According to the present invention, it is possible to provide a fluorine resin sheet for a gasket capable of exhibiting stable sealability while suppressing deformation in the direction to the periphery of a gasket even under a high-temperature condition when processed into a gasket shape and a sheet gasket.

**Claims**

1. A fluorine resin sheet for a gasket, comprising:

   a fluorine resin; and
   an inorganic filler,
   wherein a content proportion of the fluorine resin is less than 60 vol%, and the inorganic filler includes calcined clay having a porosity of 13% or less.

2. The fluorine resin sheet for a gasket according to claim 1, wherein a content proportion of the calcined clay is 2 vol% or more and less than 25 vol%.

3. The fluorine resin sheet for a gasket according to claim 1, wherein the calcined clay is calcined kaolin.

4. The fluorine resin sheet for a gasket according to claim 2, wherein the calcined clay is calcined kaolin.

5. A sheet gasket obtained by processing the fluorine resin sheet for a gasket according to any one of claims 1 to 4.

## INTERNATIONAL SEARCH REPORT

International application No.

**PCT/JP2022/015348**

### A. CLASSIFICATION OF SUBJECT MATTER

*C08L 27/12*(2006.01)i; *C09K 3/10*(2006.01)i; *F16J 15/10*(2006.01)i; *C08K 3/34*(2006.01)i
FI:    C09K3/10 M; F16J15/10 W; C08L27/12; C08K3/34; F16J15/10 G

According to International Patent Classification (IPC) or to both national classification and IPC

### B. FIELDS SEARCHED

Minimum documentation searched (classification system followed by classification symbols)

C08L27/12; C09K3/10; F16J15/10; C08K3/34

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2011-157546 A (NICHIAS CORP.) 18 August 2011 (2011-08-18)<br>claims, examples, paragraph [0021] | 1-5 |
| Y | JP 2018-80754 A (UCHIYAMA MANUFACTURING CORP.) 24 May 2018 (2018-05-24)<br>examples | 1-5 |
| Y | JP 2019-90530 A (NICHIAS CORP.) 13 June 2019 (2019-06-13)<br>examples 16-20 | 1-5 |
| Y | CN 105860370 A (ANHUI JINGYI GLASS MACHINERY CO., LTD.) 17 August 2016 (2016-08-17)<br>examples | 1-5 |
| Y | JP 2001-270975 A (SUMITOMO BAKELITE CO., LTD.) 02 October 2001 (2001-10-02)<br>paragraphs [0001], [0008], examples | 1-5 |

☐ Further documents are listed in the continuation of Box C.    ☑ See patent family annex.

| | | |
|---|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family | |

| Date of the actual completion of the international search | Date of mailing of the international search report |
|---|---|
| **18 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/015348**

| Patent document cited in search report | | | Publication date (day/month/year) | Patent family member(s) | Publication date (day/month/year) |
|---|---|---|---|---|---|
| JP | 2011-157546 | A | 18 August 2011 | EP 2343331 A1 claims, examples, paragraph [0022] | |
| JP | 2018-80754 | A | 24 May 2018 | (Family: none) | |
| JP | 2019-90530 | A | 13 June 2019 | (Family: none) | |
| CN | 105860370 | A | 17 August 2016 | (Family: none) | |
| JP | 2001-270975 | A | 02 October 2001 | (Family: none) | |

Form PCT/ISA/210 (patent family annex) (January 2015)

**REFERENCES CITED IN THE DESCRIPTION**

**Patent documents cited in the description**

- JP 5391188 B